(19)

Europäisches Patentamt

European Patent Office

Office européen des brevets

(11) **EP 4 625 984 A1**

(12) **EUROPEAN PATENT APPLICATION**

(43) Date of publication:
01.10.2025 Bulletin 2025/40

(21) Application number: 24305434.3

(22) Date of filing: 25.03.2024

(51) International Patent Classification (IPC):
*H04N 19/12* (2014.01)    *H04N 19/159* (2014.01)
*H04N 19/176* (2014.01)    *H04N 19/593* (2014.01)

(52) Cooperative Patent Classification (CPC):
**H04N 19/176; H04N 19/12; H04N 19/159;**
**H04N 19/593;** H04N 19/11; H04N 19/122

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **BONNINEAU, Charles
MONTREAL, H2J 1G1 (CA)**

• **PURI, Saurabh
SAINT-LAZARE, J7T 0P6 (CA)**
• **NASER, Karam
35250 MOUAZE (FR)**
• **LE LEANNEC, Fabrice
35830 BETTON (FR)**

(74) Representative: **Rittner, Karsten
Rittner & Partner
Patentanwälte mbB
Schiffgraben 17
30159 Hannover (DE)**

(54) **MULTIPLE TRANSFORM SET FUSION**

(57)    In one implementation, we propose several solutions to select transforms across different transform sets without additional encoder complexity using multiple transform set fusion (MTSF). This method combines several transform sets (e.g., VIPMs and planar mode transform sets) to introduce diversity in the transform selection process for modes that are not angular, planar or DC without extra encoder complexity and signaling cost. Specifically, we suggest enhancing the transform set selection process for modes that are not angular, planar or DC, such as MIP, DIMD, TIMD, SGPM, IntraTMP, IBC, and inter blocks. In one example, multiple transform sets are selected based on planar mode and two virtual intra prediction modes. A transform kernel is selected from each of these transform sets based on a predetermined rule, and the selected transform kernels are placed in a final transform set based on a pre-determined order.

| | |
|---|---|
| Obtain the residual coefficients | 1110 |
| Compute the VIPM1 and VIPM2 | 1120 |
| Build the final NSPT transform set | 1130 |
| Perform RDO to select the best NSPT kernel | 1140 |
| Obtain the transform coefficient using the selected kernel | 1150 |
| Transmit the index to the decoder | 1160 |

FIG. 11

**Description**

TECHNICAL FIELD

The present embodiments generally relate to a method and an apparatus for transform coding in video encoding and decoding.

BACKGROUND

To achieve high compression efficiency, image and video coding schemes usually employ prediction and transform to leverage spatial and temporal redundancy in the video content. Generally, intra or inter prediction is used to exploit the intra or inter picture correlation, then the differences between the original block and the predicted block, often denoted as prediction errors or prediction residuals, are transformed, quantized, and entropy coded. To reconstruct the video, the compressed data are decoded by inverse processes corresponding to the entropy coding, quantization, transform, and prediction.

SUMMARY

According to an embodiment, a method of encoding is provided, comprising: selecting a first intra prediction mode and a second intra prediction mode for a block of a picture; obtaining at least one of a first transform set and a second transform set corresponding to said first and second intra prediction modes, respectively; obtaining a transform set based on said at least one of a first transform set and a second transform set, wherein transform kernels for said transform set are selected from said first and second transform sets, and wherein said transform set is not signaled in a bitstream; obtaining a transform kernel from said transform set; and encoding said block based on said transform kernel.

According to another embodiment, a method of decoding is provided, comprising: selecting a first intra prediction mode and a second intra prediction mode for a block of a picture; obtaining at least one of a first transform set and a second transform set corresponding to said first and second intra prediction modes, respectively; obtaining a transform set based on said at least one of a first transform set and a second transform set, wherein transform kernels for said transform set are selected from said first and second transform sets, and wherein said transform set is not signaled in a bitstream; obtaining a transform kernel from said transform set; and decoding said block based on said transform kernel.

According to another embodiment, an apparatus for encoding is provided, comprising one or more processors and at least one memory coupled to said one or more processors, wherein said one or more processors are configured to: select a first intra prediction mode and a second intra prediction mode for a block of a picture; obtain at least one of a first transform set and a second transform set corresponding to said first and second intra prediction modes, respectively; obtain a transform set based on said at least one of a first transform set and a second transform set, wherein transform kernels for said transform set are selected from said first and second transform sets, and wherein said transform set is not signaled in a bitstream; obtain a transform kernel from said transform set; and encode said block based on said transform kernel.

According to another embodiment, an apparatus for decoding is provided, comprising one or more processors and at least one memory coupled to said one or more processors, wherein said one or more processors are configured to: select a first intra prediction mode and a second intra prediction mode for a block of a picture; obtain at least one of a first transform set and a second transform set corresponding to said first and second intra prediction modes, respectively; obtain a transform set based on said at least one of a first transform set and a second transform set, wherein transform kernels for said transform set are selected from said first and second transform sets, and wherein said transform set is not signaled in a bitstream; obtain a transform kernel from said transform set; and decode said block based on said transform kernel.

One or more embodiments also provide a computer program comprising instructions which when executed by one or more processors cause the one or more processors to perform the method according to any of the embodiments described herein. One or more of the present embodiments also provide a computer readable storage medium having stored thereon instructions for processing video data according to the methods described herein.

One or more embodiments also provide a computer readable storage medium having stored thereon video data generated according to the methods described above. One or more embodiments also provide a method and apparatus for transmitting or receiving the video data generated according to the methods described herein.

BRIEF DESCRIPTION OF THE DRAWINGS

FIG. 1 illustrates a block diagram of a system within which aspects of the present embodiments may be implemented.

FIG. 2 illustrates a block diagram of an embodiment of a video encoder.

FIG. 3 illustrates a block diagram of an embodiment of a video decoder.

FIG. 4 illustrates an example of explicit MTS set selection in ECM (modeIdx = 4 and sizeIdx = 0).

FIG. 5. illustrates the ROI (Region-Of-Interest) for LFNST16.

FIG. 6 illustrates the ROI for LFNST8.

FIG. 7 illustrates that NSPT is applied to small blocks, while LFNST is applied for the rest.

FIG. 8 illustrates a LFNST/NSPT LUT with corresponding planar, VIPM1 and VIPM2 transform sets.

FIG. 9 illustrates that a TU's final transform set is generated based on predetermined fusion of planar, VIPM1 and VIPM2 transform sets, according to an embodiment.

FIG. 10 illustrates a method of constructing the final transform set, according to an embodiment.

FIG. 11 illustrates an encoding method in the case of NSPT, according to an embodiment.

FIG. 12 illustrates a decoding method in the case of NSPT, according to an embodiment.

FIG. 13 illustrates that a TU's final transform set is generated based on dynamic fusion of planar, VIPM1 and VIPM2 transform sets, according to an embodiment.

DETAILED DESCRIPTION

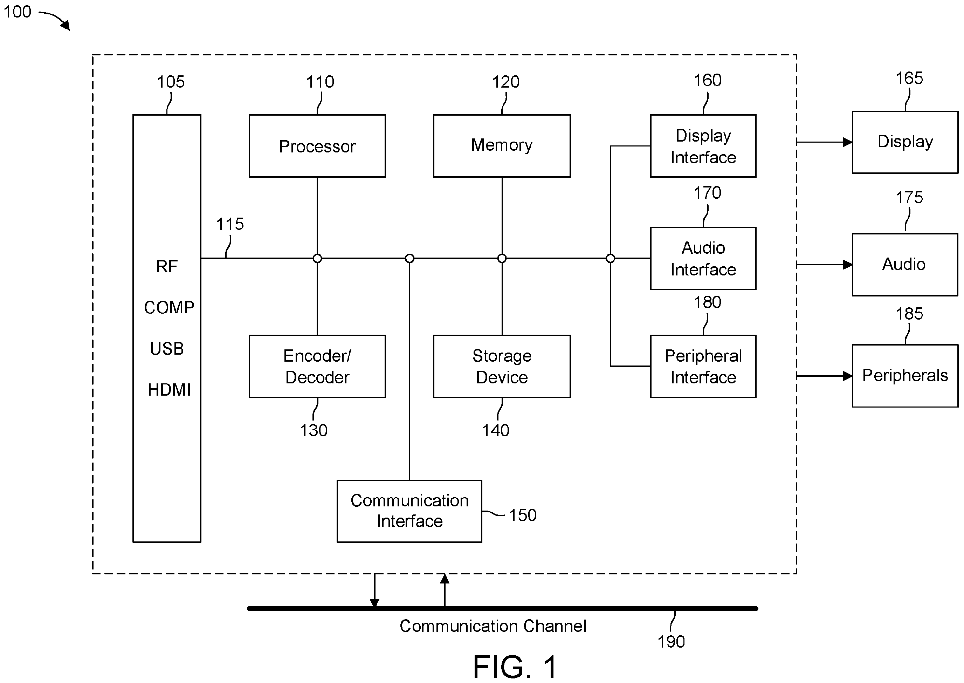

FIG. 1 illustrates a block diagram of an example of a system in which various aspects and embodiments can be implemented. System 100 may be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 100, singly or in combination, may be embodied in a single integrated circuit, multiple ICs, and/or discrete components. For example, in at least one embodiment, the processing and encoder/decoder elements of system 100 are distributed across multiple ICs and/or discrete components. In various embodiments, the system 100 is communicatively coupled to other systems, or to other electronic devices, via, for example, a communications bus or through dedicated input and/or output ports. In various embodiments, the system 100 is configured to implement one or more of the aspects described in this application.

The system 100 includes at least one processor 110 configured to execute instructions loaded therein for implementing, for example, the various aspects described in this application. Processor 110 may include embedded memory, input output interface, and various other circuitries as known in the art. The system 100 includes at least one memory 120 (e.g., a volatile memory device, and/or a non-volatile memory device). System 100 includes a storage device 140, which may include non-volatile memory and/or volatile memory, including, but not limited to, EEPROM, ROM, PROM, RAM, DRAM, SRAM, flash, magnetic disk drive, and/or optical disk drive. The storage device 140 may include an internal storage device, an attached storage device, and/or a network accessible storage device, as non-limiting examples.

System 100 includes an encoder/decoder module 130 configured, for example, to process data to provide an encoded video or decoded video, and the encoder/decoder module 130 may include its own processor and memory. The encoder/decoder module 130 represents module(s) that may be included in a device to perform the encoding and/or decoding functions. As is known, a device may include one or both of the encoding and decoding modules. Additionally, encoder/decoder module 130 may be implemented as a separate element of system 100 or may be incorporated within processor 110 as a combination of hardware and software as known to those skilled in the art.

Program code to be loaded onto processor 110 or encoder/decoder 130 to perform the various aspects described in this application may be stored in storage device 140 and subsequently loaded onto memory 120 for execution by processor 110. In accordance with various embodiments, one or more of processor 110, memory 120, storage device 140, and encoder/decoder module 130 may store one or more of various items during the performance of the processes described in this application. Such stored items may include, but are not limited to, the input video, the decoded video or portions of the decoded video, the bitstream, matrices, variables, and intermediate or final results from the processing of equations, formulas, operations, and operational logic.

In several embodiments, memory inside of the processor 110 and/or the encoder/decoder module 130 is used to store instructions and to provide working memory for processing that is needed during encoding or decoding. In other embodiments, however, a memory external to the processing device (for example, the processing device may be either the processor 110 or the encoder/decoder module 130) is used for one or more of these functions. The external memory may be the memory 120 and/or the storage device 140, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC.

The input to the elements of system 100 may be provided through various input devices as indicated in block 105. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 105 have associated respective input processing elements as known in the art. For example, the RF portion may be associated with elements suitable for (i) selecting a desired frequency (also referred to as selecting a signal, or band-limiting a signal to a band of frequencies), (ii) down converting the selected signal, (iii) band-limiting again to a narrower band of frequencies to select (for example) a signal frequency band which may be referred to as a channel in certain embodiments, (iv) demodulating the down converted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements may include inserting elements in between existing elements, for example, inserting amplifiers and an analog-to-digital converter. In various embodiments, the RF portion includes an antenna.

Additionally, the USB and/or HDMI terminals may include respective interface processors for connecting system 100 to other electronic devices across USB and/or HDMI connections. It is to be understood that various aspects of input processing, for example, Reed-Solomon error correction, may be implemented, for example, within a separate input processing IC or within processor 110 as necessary. Similarly, aspects of USB or HDMI interface processing may be implemented within separate interface ICs or within processor 110 as necessary. The demodulated, error corrected, and demultiplexed stream is provided to various processing elements, including, for example, processor 110, and encoder/-decoder 130 operating in combination with the memory and storage elements to process the datastream as necessary for presentation on an output device.

Various elements of system 100 may be provided within an integrated housing, Within the integrated housing, the various elements may be interconnected and transmit data therebetween using suitable connection arrangement 115, for example, an internal bus as known in the art, including the I2C bus, wiring, and printed circuit boards.

The system 100 includes communication interface 150 that enables communication with other devices via communication channel 190. The communication interface 150 may include, but is not limited to, a transceiver configured to transmit and to receive data over communication channel 190. The communication interface 150 may include, but is not limited to, a modem or network card and the communication channel 190 may be implemented, for example, within a wired and/or a wireless medium.

Data is streamed to the system 100, in various embodiments, using a Wi-Fi network such as IEEE 802. 11. The Wi-Fi signal of these embodiments is received over the communications channel 190 and the communications interface 150 which are adapted for Wi-Fi communications. The communications channel 190 of these embodiments is typically connected to an access point or router that provides access to outside networks including the Internet for allowing streaming applications and other over-the-top communications. Other embodiments provide streamed data to the system 100 using a set-top box that delivers the data over the HDMI connection of the input block 105. Still other embodiments provide streamed data to the system 100 using the RF connection of the input block 105.

The system 100 may provide an output signal to various output devices, including a display 165, speakers 175, and other peripheral devices 185. The other peripheral devices 185 include, in various examples of embodiments, one or more of a stand-alone DVR, a disk player, a stereo system, a lighting system, and other devices that provide a function based on the output of the system 100. In various embodiments, control signals are communicated between the system 100 and the display 165, speakers 175, or other peripheral devices 185 using signaling such as AV. Link, CEC, or other communications protocols that enable device-to-device control with or without user intervention. The output devices may be communicatively coupled to system 100 via dedicated connections through respective interfaces 160, 170, and 180. Alternatively, the output devices may be connected to system 100 using the communications channel 190 via the communications interface 150. The display 165 and speakers 175 may be integrated in a single unit with the other components of system 100 in an electronic device, for example, a television. In various embodiments, the display interface 160 includes a display driver, for example, a timing controller (T Con) chip.

The display 165 and speaker 175 may alternatively be separate from one or more of the other components, for example, if the RF portion of input 105 is part of a separate set-top box. In various embodiments in which the display 165 and speakers 175 are external components, the output signal may be provided via dedicated output connections, including, for example, HDMI ports, USB ports, or COMP outputs.

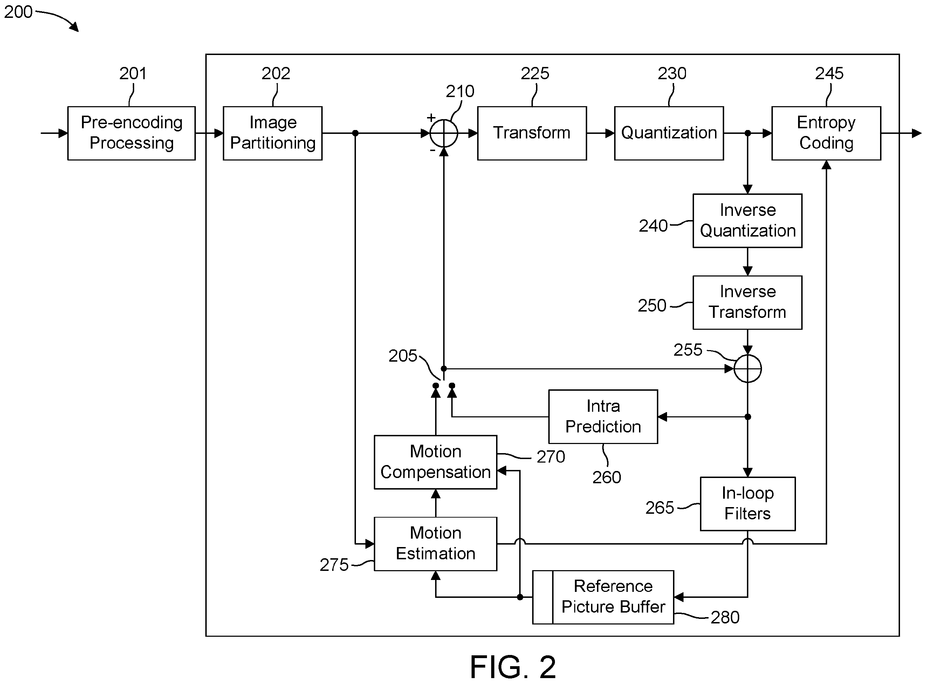

FIG. 2 illustrates an example of a block-based hybrid video encoder 200, such as a VVC (Versatile Video Coding) encoder. FIG. 2 may also illustrate an encoder in which improvements are made to the VVC standard or an encoder employing technologies similar to VVC.

In the present application, the terms "reconstructed" and "decoded" may be used interchangeably, the terms "encoded" or "coded" may be used interchangeably, and the terms "image," "picture" and "frame" may be used interchangeably. Usually, but not necessarily, the term "reconstructed" is used at the encoder side while "decoded" is used at the decoder side.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the preprocessing, and attached to the bitstream.

In the encoder 200, a picture is encoded by the encoder elements as described below. The picture to be encoded is partitioned (202) and processed in units of, for example, CUs (Coding Units). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements such as the picture partitioning information, are entropy coded (245) to output a bitstream. As a non-limiting example, context-based adaptive binary arithmetic coding (CABAC) can be used to encode syntax elements into the bitstream.

The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset)/ALF (Adaptive Loop Filter) filtering to reduce encoding artifacts. The filtered image is stored in a reference picture buffer (280).

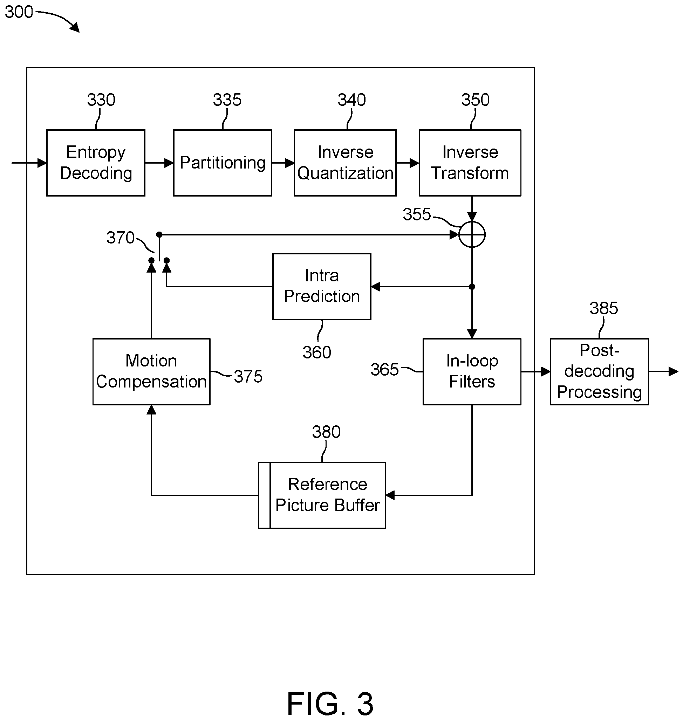

FIG. 3 illustrates a block diagram of an example video decoder 300. In the decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded (330) to obtain transform coefficients, prediction modes, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block can be obtained (370) from intra prediction (360) or motion-compensated prediction (i.e., inter prediction) (375). In-loop filters (365) are applied to the reconstructed image. The filtered image is stored at a reference picture buffer (380). Note that, for a given picture, the contents of the reference picture buffer 380 on the decoder 300 side is identical to the contents of the reference picture buffer 280 on the encoder 200 side for the same picture.

The decoded picture can further go through post-decoding processing (385), for example, an inverse color transform (e.g., conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

The selection of transform in ECM (Enhanced Compression Model) depends on the intra prediction mode of the current block. The intra prediction mode acts as input to a lookup table (LUT) to get a suitable transform set for the block. This is done to take advantage of the correlation between the directional intra mode and residuals type as residual samples tend to have larger absolute values when they are far away from the reference samples.

To deduce the intra mode for transform selection for non-directional modes, such as MIP (Matrix weighted Intra Prediction), IntraTMP (Intra Template Matching Prediction), IBC (Intra Block Copy), and inter blocks, some methods have been proposed. For example, the DIMD (Decoder Side Intra Mode Derivation) mode is used to derive a virtual intra prediction mode (VIPM) for these modes to select the appropriate MTS (Multiple Transform Set) and LFNST (Low-Frequency Non-Separable Transform)/NSPT (Non-Separable Primary Transform) transform sets. Note that a VIPM is an angular intra prediction mode, DC or planar mode. Here, an angular mode means a directional intra prediction mode. Planar and DC can be referred as non-angular modes. The VIPM mode is derived to indicate the characteristics of the prediction residuals and therefore is used to indicate the transform set selection, even though the VPM mode is not used for actual encoding. However, since the transform sets are defined based on intra prediction modes, including angular modes, planar mode and DC mode, the VIPM may not always provide the best transform set for the current block as it does not reflect the type of residual for blocks not encoded in angular, DC or planar intra prediction modes.

This document proposes several solutions to select transforms across different transform sets without additional encoder complexity using multiple transform set fusion (MTSF). This method combines several transform sets (i.e., VIPMs and planar mode transform sets) to introduce diversity in the transform selection process for modes that are not angular, planar or DC modes without extra encoder complexity and signaling cost. Specifically, we suggest enhancing the transform set selection process for modes that are not angular, planar or DC modes, such as MIP, DIMD, TIMD (Template-based Intra Mode Derivation), SGPM (Spatial Geometric Partitioning Mode), IntraTMP, IBC, and inter blocks.

Intra Prediction in ECM 10 (Enhanced Compression Model 10)

To capture the arbitrary edge directions presented in natural video, ECM features 65 directional intra prediction modes as in VVC. For predicting blocks with smoothly varying textures, the PLANAR and DC modes are used.

When DIMD (Decoder Side Intra Mode Derivation) is applied, a horizontal gradient and a vertical gradient are calculated for each sample in a template of reconstructed neighbor samples to build a Histogram of Gradients (HoG). Up to five intra modes are derived from the gradients, and those five predictors are combined with the planar mode predictor with weights derived from the histogram of gradients.

When used, TIMD (Template-based Intra Mode Derivation) is applied the same way on the encoder and decoder sides. For each intra prediction mode in the MPM list of the current block, if needed, supplemented with default modes, it computes a prediction of the template of the block from the decoded reference samples of the template, and the SATD (Sum of Absolute Transformed Differences) between this prediction and the template of the block is calculated. The two intra prediction modes with the minimum SATDs are selected as the TIMD modes.

Intra template matching prediction (IntraTMP) is an intra prediction mode that copies a prediction block from the reconstructed part of the current frame, whose L-shaped template most closely matches the current template. For a predefined search range, the encoder searches for the most similar template to the current template in a reconstructed part of the current frame and uses the corresponding block as a prediction block. The encoder then signals the usage of this mode, and the same prediction operation is performed at the decoder side.

In Intra Block Copy (IBC), the prediction is obtained from a reference block within the same picture indicated by a block vector.

To predict the samples of a block of width W and height H, Matrix weighted Intra Prediction (MIP) takes one line of H reconstructed neighboring boundary samples left of the block and one line of W reconstructed neighboring boundary samples above the block as input. The generation of the prediction signal is based on averaging neighboring samples, matrix vector multiplication with the averaged samples and linear interpolation.

Spatial geometric partitioning mode (SGPM) is an intra mode that resembles the inter coding tool of geometric partitioning mode (GPM), where the two prediction parts are generated from the intra predicted process. In this mode, a candidate list is built with each entry containing one partition split and two intra prediction modes. The selected candidate index is signalled.

Intra MTS in ECM

In the VVC design, DST7 and DCT8 transform kernels are used in addition to DCT2. These kernels are used for intra and inter coding. Transform skip may also be used. In VVC, the primary transforms are separable transforms. Five different transform pairs (a pair of horizontal transform and vertical transform) are supported, including (DCT2, DCT2) and four MTS (Multiple Transform Selection) mode combinations, i.e., (DST7, DST7), (DST7, DCT8), (DCT8, DST7) and (DCT8, DCT8).

In ECM, additional primary transforms including DCT5, DST4, DST1, and identity transform (IDT) are employed. Also MTS sets are made dependent on the TU size and intra mode information. For blocks predicted via IntraTMP, the DIMD process is used on the prediction block to derive an intra mode that is used for transform selection. Specifically, a horizontal gradient and a vertical gradient are calculated for each predicted sample to build a Histogram of Gradients (HoG). Then the intra prediction mode with the largest histogram amplitude value (VIPM), is used to determine the MTS transform set (a set of possible transform pairs).

Overall, 16 different TU sizes are considered, and for each TU size, 5 different classes are considered depending on intra-mode information. For each class, 1, 4 or 6 different transform pairs (MTS candidates) are considered in the MTS transform set. The number of intra MTS candidates is adaptively selected (between 1, 4 and 6 MTS candidates) depending on the sum of absolute value of transform coefficients. The sum is compared against two fixed thresholds to determine the total number of allowed MTS candidates:

$$\text{total number of allowed MTS candidates} = \begin{cases} 1\,, \text{if sum} \leq \text{th0} \\ 4\,, \text{if th0} < \text{sum} \leq \text{th1} \\ 6\,, \text{if sum} > \text{th1} \end{cases}$$

Although a total of 80 (16 transform sizes times 5 classes) different classes are considered, some of these classes may share a same transform set. In ECM, there are 58 (less than 80) unique entries in the resultant look-up table (LUT).

For angular modes, a joint symmetry over TU shape and intra prediction is considered. So, a mode i (i > 34) with TU shape A×B will be mapped to the same class corresponding to the mode j = (68 - i) with TU shape B×A. However, for each transform pair the order of the horizontal and vertical transform kernel is swapped. For example, for a 16x4 block with mode 18 (horizontal prediction) and a 4x16 block with mode 50 (vertical prediction) are mapped to the same class. However, the vertical and horizontal transform kernels are swapped. For the wide-angle modes the nearest conventional angular mode is used for the transform set determination. For example, mode 2 is used for all the modes between -2 and -14. Similarly, mode 66 is used for mode 67 to mode 80. In addition, a dedicated mode index is assigned to MIP, resulting in a total of 36 possible modes entries in the LUT.

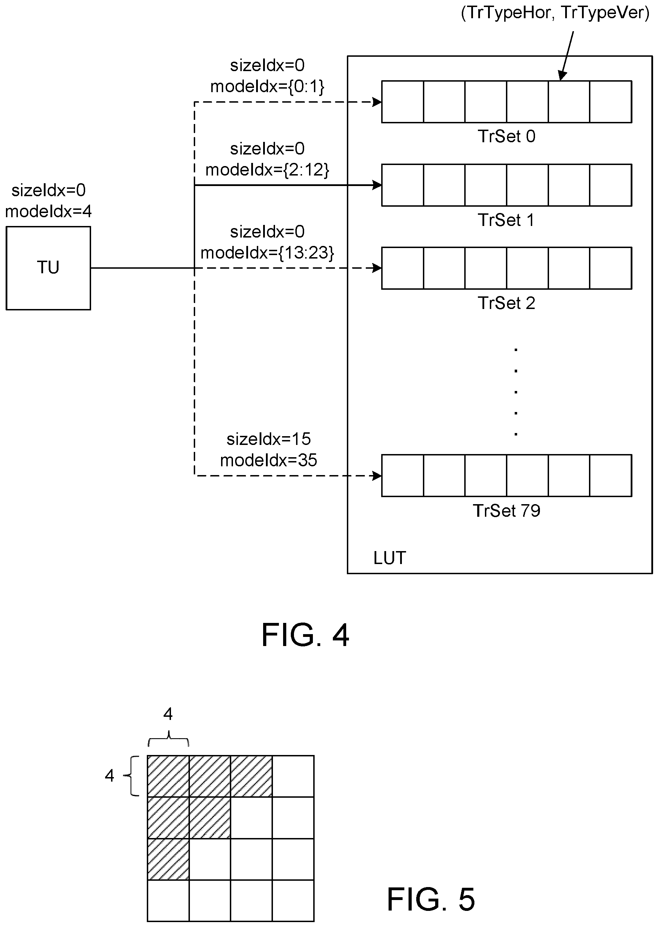

An example of transform set selection in the LUT for a given TU size and intra mode is illustrated in FIG. 4, where a transform set (TrSet i) is selected based on the TU size (sizeIdx) and the intra mode (modeIdx).

IDT is applied for blocks that are 16x16 or smaller and have intra modes within the proximity of horizontal and vertical intra directions, where the proximity is defined by a threshold that depends on the block size. If the transform index is equal to 3 and a block satisfies the above condition, the horizontal and/or vertical identity transform is applied.

LFNST in ECM

The transformed coefficients from the primary transform can be further transformed with a non-separable transform applied to the low frequency part. This is known as low-frequency non-separable transform (LFNST). The main idea of this transform stage is to further remove signal redundancies that are not captured by the separable two-dimensional first stage transform (DCT-II and MTS). The transform matrices are derived from offline training by minimizing the correlation between transform coefficients, using principal component analysis.

In VVC, 4 transform sets and 2 non-separable transform matrices/kernels (candidates) per transform set are used in LFNST. The mapping from the intra prediction mode to the transform set is pre-defined. For each LFNST transform set, the selected non-separable secondary transform candidate is further specified by the explicitly signalled LFNST index.

In ECM, the LFNST design in VVC is extended as follows:

- The number of LFNST sets (N) and candidates (C) in a set are extended to N = 35 and C = 3, and the LFNST set (lfnstTrSetIdx) for a given intra mode (predModeIntra) is derived according to the following formula:

  ◦ For predModeIntra < 0, lfnstTrSetIdx is equal to 2
  ◦ lfnstTrSetIdx = predModeIntra, for predModeIntra in [0,34]
  ◦ lfnstTrSetIdx = 68 - predModeIntra, for predModeIntra in [35,66]

- Three different kernels, LFNST4, LFNST8, and LFNST16, are defined to indicate LFNST kernel sets, which are applied to 4xN/Nx4 (N≥4), 8xN/Nx8 (N≥8), and MxN (M, N≥16), respectively.

The mapping from intra prediction modes to these sets is shown in Table 1.

Table 1. Mapping of intra prediction modes to LFNST set index

| Intra pred mode | -14 | -13 | -12 | -11 | -10 | -9 | -8 | -7 | -6 | -5 | -4 | -3 | -2 | -1 |
|---|---|---|---|---|---|---|---|---|---|---|---|---|---|---|

(continued)

| LFNST set index | 2 | 2 | 2 | 2 | 2 | 2 | 2 | 2 | 2 | 2 | 2 | 2 | 2 | 2 |
|---|---|---|---|---|---|---|---|---|---|---|---|---|---|---|
| Intra pred mode | 0 | 1 | 2 | 3 | 4 | 5 | 6 | 7 | 8 | 9 | 10 | 11 | 12 | 13 |
| LFNST set index | 0 | 1 | 2 | 3 | 4 | 5 | 6 | 7 | 8 | 9 | 10 | 11 | 12 | 13 |
| Intra pred mode | 14 | 15 | 16 | 17 | 18 | 19 | 20 | 21 | 22 | 23 | 24 | 25 | 26 | 27 |
| LFNST set index | 14 | 15 | 16 | 17 | 18 | 19 | 20 | 21 | 22 | 23 | 24 | 25 | 26 | 27 |
| Intra pred mode | 28 | 29 | 30 | 31 | 32 | 33 | 34 | 35 | 36 | 37 | 38 | 39 | 40 | 41 |
| LFNST set index | 28 | 29 | 30 | 31 | 32 | 33 | 34 | 33 | 32 | 31 | 30 | 29 | 28 | 27 |
| Intra pred mode | 42 | 43 | 44 | 45 | 46 | 47 | 48 | 49 | 50 | 51 | 52 | 53 | 54 | 55 |
| LFNST set index | 26 | 25 | 24 | 23 | 22 | 21 | 20 | 19 | 18 | 17 | 16 | 15 | 14 | 13 |
| Intra pred mode | 56 | 57 | 58 | 59 | 60 | 61 | 62 | 63 | 64 | 65 | 66 | 67 | 68 | 69 |
| LFNST set index | 12 | 11 | 10 | 9 | 8 | 7 | 6 | 5 | 4 | 3 | 2 | 2 | 2 | 2 |
| Intra pred mode | 70 | 71 | 72 | 73 | 74 | 75 | 76 | 77 | 78 | 79 | 80 | | | |
| LFNST set index | 2 | 2 | 2 | 2 | 2 | 2 | 2 | 2 | 2 | 2 | 2 | | | |

The kernel dimensions are specified by:

$$(LFSNT4, LFNST8^*, LFNST16^*) = (16\text{x}16, 32\text{x}64, 32\text{x}96)$$

The forward LFNST is applied to the top-left low frequency region, which is called Region-Of-Interest (ROI). When LFNST is applied, primary-transformed coefficients that exist in the region other than ROI are zeroed out, which is not changed from the VVC standard.

The ROI for LFNST16 is depicted in FIG. 5. It consists of six 4x4 sub-blocks, which are consecutive in scan order. Since the number of input samples is 96, the transform matrix for forward LFNST16 can be Rx96. R is chosen to be 32 in ECM, that is, 32 coefficients (two 4x4 sub-blocks) are generated from forward LFNST16 accordingly, which are placed following the coefficient scan order.

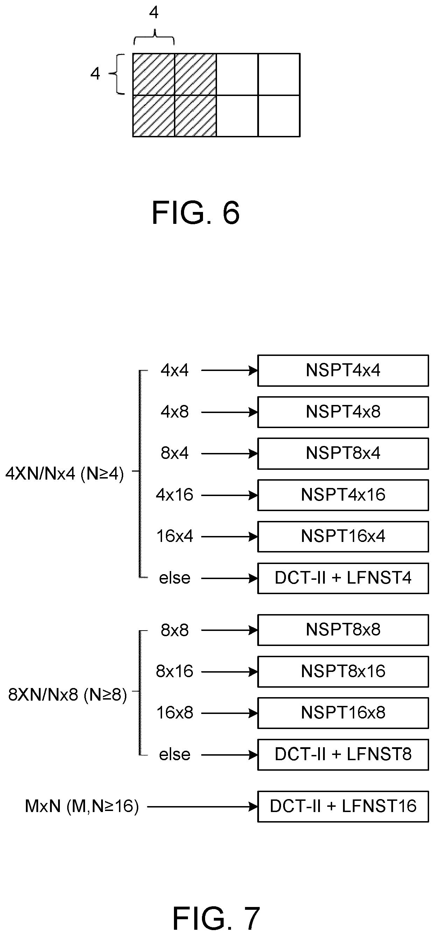

The ROI for LFNST8 is shown in FIG. 6. The forward LFNST8 matrix can be Rx64 and R is chosen to be 32. The generated coefficients are located in the same manner as with LFNST16.

NSPT in ECM

NSPT (Non-Separable Primary Transform) is designed to replace the 2 stages of transform (DCT2 followed by LFNST) by a single non-separable transform. This is only allowed for small blocks as indicated in FIG. 7.

All NSPTs consist of 35 sets and 3 candidates in a set (similar to the current LFNST). The kernels of NSPT have the following shapes:

- NSPT4x4: 16x16

- NSPT4x8/NSPT8x4: 32x20

- NSPT8x8: 64x32

- NSPT4x16/NSPT16x4: 64x24

- NSPT8x16/NSPT16x8: 128x40

Therefore, 12, 32, 40 and 88 coefficients are zeroed out using NSPT4x8/NSPT8x4, NSPT8x8, NSPT4x16/NSPT16x4 and NSPT8x16/NSPT16x8, respectively.

Multiple transform set selection for LFNST/NSPT

In ECM, the LFNST/NSPT transform set is implicitly decided by an intra prediction mode (IPM). For a block coded with PLANAR, DC or directional modes, the IPM is set as the intra prediction mode itself. For a DIMD coded block, the IPM (VIPM for transform selection) is set as the best mode derived by the DIMD process with neighboring reconstructed pixels. For a TIMD coded block, the IPM (VIPM for transform selection) is set as the best mode derived by the TIMD process. For a MIP or IntraTMP coded block, the IPM (VIPM for transform selection) is set as the best mode derived by the DIMD process with the prediction. For an SGPM coded block, the IPM (VIPM for transform selection) is set as the mode corresponding to the split direction of SGPM.

The prediction strategies of DIMD, TIMD, SGPM, MIP and IntraTMP are different from normal intra prediction modes like PLANAR, DC and directional modes. DIMD, TIMD, SGPM and IntraTMP allow multiple predictions combination. MIP makes the prediction using matrix calculation. IntraTMP references the reconstructed region in the current picture. The prediction residual may demonstrate different feature from the derived IPM (virtual IPM).

Multiple transform set selection (MTSS) allows CUs coded with DIMD, TIMD, MIP, SGPM and IntraTMP to select one LFNST/NSPT transform set out of 2 candidate sets. If (1) the current block is coded with DIMD, TIMD, MIP, SGPM, or IntraTMP, and (2) LFNST/NSPT is used, one more bin is employed to indicate whether the first or the second candidate transform set is selected. The first candidate transform set remains the same as the current ECM. The second candidate corresponds to another IPM derived by the DIMD process with neighboring reconstructed pixels. Specially, if a TIMD coded block applies fusion, the second TIMD IPM is considered to derive the second candidate set. For an SGPM coded block, the 2 IPMs that SGPM uses is considered to derive the second candidate set. The difference between the first and second IPMs should be larger than 4 to keep the diversity.

Multiple transform set fusion

For angular intra prediction modes, residual characteristics have a significant correlation with the intra mode of the block. When samples are farther from the reference samples, they tend to have larger absolute values, which is not the case for residuals from inter, IBC, MIP, and IntraTMP modes. Therefore, the VIPM used to select the LFNST/NSPT transform set for these blocks does not reflect the characteristics of the residual as well as angular intra prediction mode. To solve this, selecting the best transform sets across multiple ones can be considered, as detailed above. However, this method introduces additional encoder complexity as the number of LFNST/NSPT RD checks increases from 3 to 6 for blocks using multiple transform set selection (MTSS). Additionally, it also requires additional signaling because the best transform set index must be signaled to the decoder.

In this document, we propose multiple transform set fusion (MTSF) to replace MTSS. No additional RD checks are performed for modes using MTSF, and no signaling is required to indicate which transform set has been selected by the encoder.

The proposed transform set fusion is composed of kernels from different transform sets. In the following, we use three transform sets in our examples. However, the method can be applied to another number of transform sets. The transform sets that are considered are VIPM1 transform set (i.e., transform set corresponding to the VPM1 intra mode), VIPM2 transform set

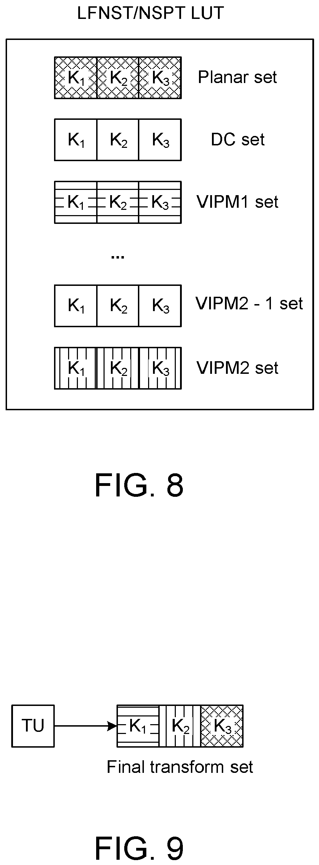

(transform set corresponding to the VPM2 intra mode) and planar transform set (transform set corresponding to the planar mode), as illustrated in FIG. 8. The detail on VIPM1 and VIPM2 regarding each prediction mode is given in Table 2. Here, "2nd IPM in DIMD HoG" refers to the intra prediction mode with the second largest histogram amplitude value in DIMD HoG.

Table 2. IPM used as VIPM1and VIPM2 regarding the prediction mode.

| Prediction mode | VIPM1 | VIPM2 |
|---|---|---|
| DIMD | DIMD derived IPM | 2nd IPM in DIMD HoG |
| TIMD | 1st TIMD derived IPM | 2nd TIMD derived IPM |
| SGPM | Split direction | 1st or 2nd SGPM partition IPM |
| MIP | DIMD derived IPM | 2nd IPM in DIMD HoG |
| IntraTMP | DIMD derived IPM | 2nd IPM in DIMD HoG |
| IBC | DIMD derived IPM | 2nd IPM in DIMD HoG |
| Inter | DIMD derived IPM | 2nd IPM in DIMD HoG |

In one embodiment, the fusion of transform sets is predetermined and fixed. If the TU is using MTSF, one kernel from each transform set is selected in a specific order (fusion order) to create the final transform set. Here, the fusion order, as well as which kernel is selected from each transform set (kernel choice), is known by the decoder to avoid signaling. For example, in FIG. 9, the first kernel K1 in the final transform set is the first kernel from the VIPM1 set, the second kernel K2 in the final transform set is the second kernel from the VIPM2 set, and the third kernel K3 in the final transform set is the third kernel from the planar set.

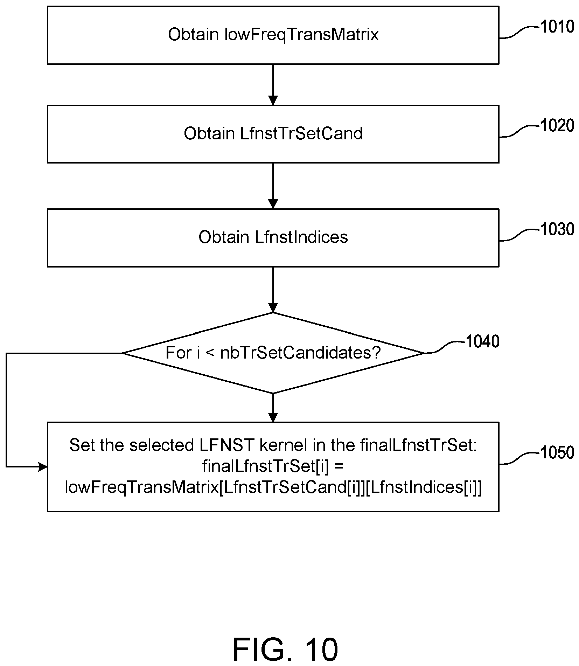

FIG. 10 illustrates a method of reconstructing the final transform set, according to this embodiment. The method illustrated in FIG. 10 can be used at the encoder or decoder. In particular, at step 1010, the encoder or decoder obtains a LFNST or NSPT matrices lookup table lowFreqTransMatrix[n] [m] containing LFNST or NSPT kernels, which are 2D matrices, with n = 0, ..., N - 1 and m = 0, ..., C - 1, where C specifies the number of kernels per LFNST or NSPT transform set and N specifies the number of LFNST or NSPT transform sets in the lookup table. At step 1020, it obtains a list of transform set candidates LfnstTrSetCand[i] indicating the fusion order, with i = 0, ..., nbTrSetCandidates - 1, whose possible values are in {0, 1, 2, ..., N -1}, where nbTrSetCandidates specifies the number of transform kernels in the final transform set. At step 1030, it obtains a list of transform indices LfnstIndices[i] indicating which kernel is selected from each transform set, with i = 0, ..., nbTrSetCandidates - 1, whose possible values are in {0, 1, 2, ..., C - 1}. For each candidate position in the final transform set (1040), the selected LFNST or NSPT kernel is placed (1050) in the array finalLfnstTrSet: finalLfnstTrSetfi] = lowFreqTransMatrix[LfnstTrSetCand[i]][LfnstIndices[i]]. LfnstTrSetCand and LfnstIndices are known to encoder and decoder, and there is no need for signaling in the bitstream. For the example in FIG. 9, nbTrSetCandidates = 3, LfnstTrSetCand = {VIPM1, VIPM2, Planar}, and LfnstIndices = {0, 1, 2}.

Note that the fusion order and kernel choice can be arbitrary and different from what is illustrated in FIG. 9. Note that even though in ECM, the number of kernels in the final transform set is 3, the number of kernels in the final transform set can be different than 3, for example, nbTrSetCandidates = 1, 2 or 4.

On the encoder side, VIPM1 and VIPM2 are computed for the current block to construct the final transform set. Then, the rate-distortion optimization step for LFNST/NSPT kernel selection is performed to test all candidate kernels in the final transform set, e.g., to select a kernel from K1, K2 and K3. The transformed coefficients are then obtained by applying the best LFNST/NSPT kernel, and the index of the best kernel in the set, denoted as lfnstIdx, is signaled to the decoder.

On the decoder side, VIPM1 and VIPM2 are computed for the current block. Then, the final transform set is built based on the fusion of the different transform sets. Finally, the final LFNST/NSPT kernel is selected in the transform set based on the lfnstIdx, and the corresponding transform is applied as inverse transform on the transformed coefficients.

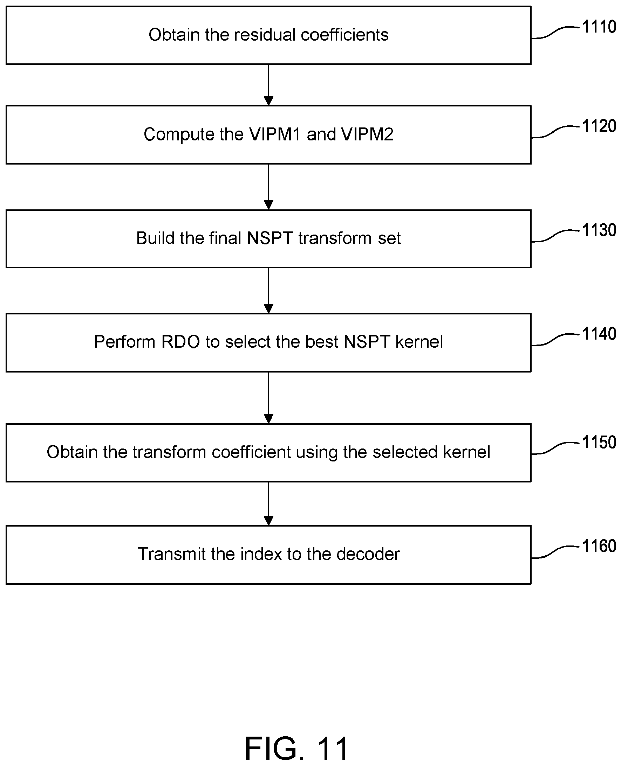

FIG. 11 illustrate an encoder in the case of NSPT, according to an embodiment. At step 1110, the encoder obtains the prediction residuals. At step 1120, the virtual intra prediction modes VIPM1 and VIPM2 are computed, for example, as shown in Table 2. At step 1130, the NSPT transform set is built, for example, as illustrated in FIG. 9 and FIG. 10. At step 1140, the encoder performs RDO (Rate-Distortion Optimization) to select the best NSPT kernel from the kernels in the NSPT transform set. At step 1150, the encoder transforms the prediction residuals into transform coefficients using the selected NSPT kernel. The index corresponding to the selected kernel in the final transform set is encoded at step 1160.

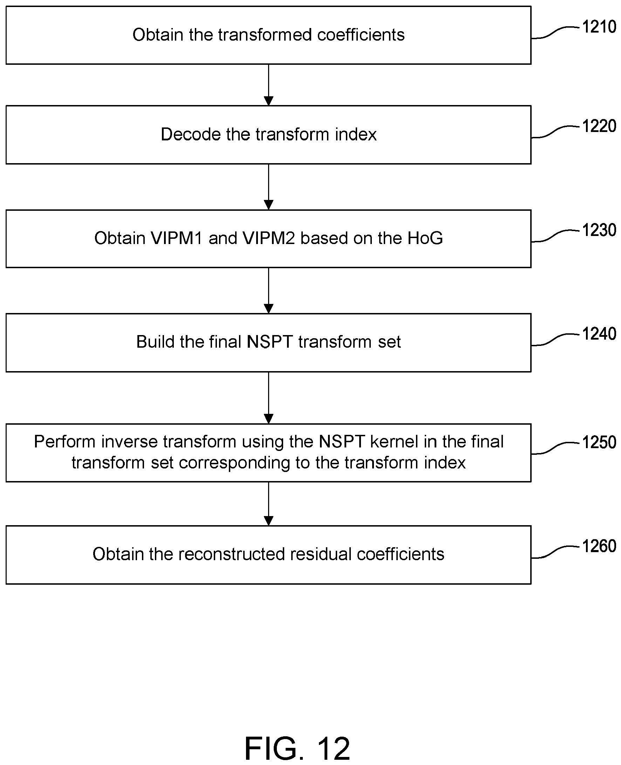

FIG. 12 illustrate a decoder in the case of NSPT, according to an embodiment. At step 1210, the decoder obtains the transform coefficients. At step 1220, the decoder decodes the transform index. At step 1230, the virtual intra prediction modes VIPM1 and VIPM2 are computed, for example, as shown in Table 2. At step 1240, the NSPT transform set is built, for example, as illustrated in FIG. 9 and FIG. 10. At step 1250, the decoder performs inverse transform on the transform coefficients to obtain prediction residuals, using the NSPT kernel in the final transform set corresponding to the transform index. At step 1260, the prediction residuals are reconstructed.

In the case of LFNST, the transform operation first applies the primary forward transform to the residuals and then the selected LFNST kernel is applied to the primary transformed coefficients at step 1150. On the decoder side, the inverse transform operation first reconstructs the primary transformed coefficients with the selected LFNST kernel, then applies the primary inverse transform to obtain the residuals at step 1250.

In a variant, the fixed order in the final transform set can be modified. For instance, the order can be: {planar, VIPM1, VIPM2} instead of {VIPM1, VIPM2, planar} in FIG. 9.

In a variant, we only consider VIPM1 and planar sets for building the final transform set. For instance, one kernel is selected from the planar LFNST/NSPT set and two kernels from the LFNST/NSPT set corresponding to VIPM1.

In a variant, only if the absolute difference between VIPM1 and VIPM2 exceeds a certain threshold, the kernels from VIPM2 are considered in the fusion. Otherwise, only the kernels coming from the VIPM1 are considered.

In a variant, if the absolute difference between VIPM1 and VIPM2 exceeds a certain threshold (meaning that DIMD does not allow deriving a clear direction), we replace the VIPM2 kernel by a kernel coming from the planar set in the final transform set. For instance, one kernel is selected from the planar LFNST/NSPT set and two kernels from the LFNST/NSPT set corresponding to VIPM1. Otherwise, only the kernels coming from the VIPM1 are considered.

In a variant, the proposed approach is applied to explicit intra MTS for primary transform selection. In this case, the transform sets are composed of primary horizontal and vertical transform pairs and the index in the set is denoted as mts_idx.

Multiple transform set fusion order based on VIPM value

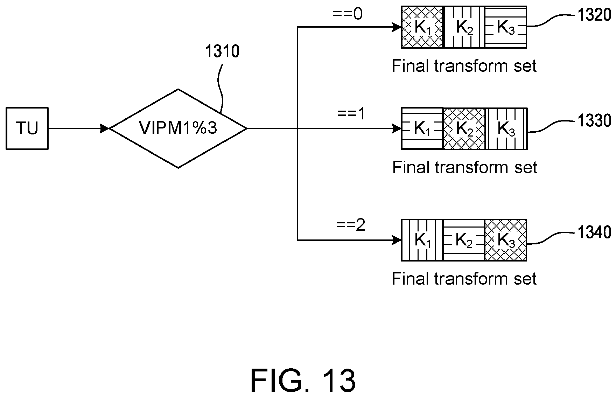

One problem with the above approach is that we always use the same LFNST/NSPT kernels from each transform set used in the fusion. In this embodiment, the final transform set design is changed based on the VIPM1 value to avoid the same kernel from each transform set being exclusively used. Thus, the final transform set is built based on, for example, the value of VIPM1%3, as illustrated in FIG. 13, where the kernels change based on the DIMD mode, which could improve the performance as it provides additional options to the encoder.

In particular, as shown in FIG. 13, the value of VIPM1%3 is checked (1310). Depending on the value of VIPM1 % 3, the final transform set is built as follows. Note that LfnstIndices is always {0, 1, 2} in this example, but in general, they can be different.

- If VIPM1%3 = 0 (1320): LfnstTrSetCand = {Planar, VIPM2, VIPM1}, and LfnstIndices = {0, 1, 2};
- If VIPM1%3 = 1 (1330): LfnstTrSetCand = {VIPM1, Planar, VIPM2}, and LfnstIndices = {0, 1, 2};
- If VIPM1%3 = 2 (1340): LfnstTrSetCand = {VIPM2, VIPM1, Planar}, and LfnstIndices = {0, 1, 2}.

On the encoder side, the VIPM1 and VIPM2 are computed for the current block to construct the final transform set based on the value of VIPM1, as shown in FIG. 13. Then, the rate-distortion optimization step for LFNST/NSPT kernel selection is performed in the final transform set. The transformed coefficients are then obtained by applying the best LFNST/NSPT kernel, and the index of the best kernel in the set, denoted as lfnstIdx, is signaled to the decoder.

On the decoder side, the VIPM1 and VIPM2 are computed for the current block. Then, the final transform set is built based on the value of VIPM1, as shown in FIG. 13. Finally, the final LFNST/NSPT kernel is selected in the transform set based on the lfnstIdx, and the corresponding transform is applied as inverse transform on the transformed coefficients.

In a variant, we only consider VIPM1 and planar sets for building the final transform set. For instance, one kernel is selected from the planar LFNST/NSPT set and two kernels from the LFNST/NSPT set corresponding to VIPM1.

In a variant, we only consider VIPM1 and planar sets for building the final transform set. For instance, for each VIPM1 % 3 value, one kernel is selected from the planar LFNST/NSPT set and two kernels from the LFNST/NSPT set corresponding to VIPM1.

In a variant, the VIPM2 is considered in the final transform set only if the absolute difference between VIPM1 and VIPM2 indices exceeds a certain threshold. Otherwise, the kernel coming from the VIPM2 transform set is replaced in the final transform set by a kernel coming from the VIPM1.

In a variant, the proposed approach is applied to intra MTS for primary transform. In this case, the transform sets are composed of primary horizontal and vertical transform pairs and the index in the set is denoted as mts_idx.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various methods and other aspects described in this application can be used to modify modules, for example, the transform and inverse transform modules (225, 250, 350), of a video encoder 200 and decoder 300 as shown in FIG. 2 and FIG. 3. Moreover, the present aspects are not limited to ECM, VVC or HEVC, and can be applied, for example, to other standards and recommendations, and extensions of any such standards and recommendations. Unless indicated otherwise, or technically precluded, the aspects described in this application can be used individually or in combination.

Various numeric values are used in the present application. The specific values are for example purposes and the aspects described are not limited to these specific values.

Various implementations involve decoding. "Decoding," as used in this application, may encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application may encompass all or part of the processes performed, for example, on an input video sequence in order to produce an encoded bitstream.

The implementations and aspects described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus, for example, a processor, which refers to processing devices in general, including, for example, a computer, a microprocessor, an integrated circuit, or a programmable logic device. Processors also include communication devices, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information may include one or more of, for example, estimating the information, calculating the information, predicting the information, or retrieving the information from memory.

Further, this application may refer to "accessing" various pieces of information. Accessing the information may include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a quantization matrix for de-quantization. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. A method of encoding, comprising:

EP 4 625 984 A1

selecting a first intra prediction mode and a second intra prediction mode for a block of a picture;
obtaining at least one of a first transform set and a second transform set corresponding to said first and second intra prediction modes, respectively;
obtaining a transform set based on said at least one of a first transform set and a second transform set, wherein transform kernels for said transform set are selected from said first and second transform sets, and wherein said transform set is not signaled in a bitstream;
obtaining a transform kernel from said transform set; and
encoding said block based on said transform kernel.

2. A method of decoding, comprising:

selecting a first intra prediction mode and a second intra prediction mode for a block of a picture;
obtaining at least one of a first transform set and a second transform set corresponding to said first and second intra prediction modes, respectively;
obtaining a transform set based on said at least one of a first transform set and a second transform set, wherein transform kernels for said transform set are selected from said first and second transform sets, and wherein said transform set is not signaled in a bitstream;
obtaining a transform kernel from said transform set; and
decoding said block based on said transform kernel.

3. An apparatus for encoding, comprising one or more processors and at least one memory coupled to said one or more processors, wherein said one or more processors are configured to:

select a first intra prediction mode and a second intra prediction mode for a block of a picture;
obtain at least one of a first transform set and a second transform set corresponding to said first and second intra prediction modes, respectively;
obtain a transform set based on said at least one of a first transform set and a second transform set, wherein transform kernels for said transform set are selected from said first and second transform sets, and wherein said transform set is not signaled in a bitstream;
obtain a transform kernel from said transform set; and
encode said block based on said transform kernel.

4. An apparatus for decoding, comprising one or more processors and at least one memory coupled to said one or more processors, wherein said one or more processors are configured to:

select a first intra prediction mode and a second intra prediction mode for a block of a picture;
obtain at least one of a first transform set and a second transform set corresponding to said first and second intra prediction modes, respectively;
obtain a transform set based on said at least one of a first transform set and a second transform set, wherein transform kernels for said transform set are selected from said first and second transform sets, and wherein said transform set is not signaled in a bitstream;
obtain a transform kernel from said transform set; and
decode said block based on said transform kernel.

5. The method of claim 1 or 2, or the apparatus of claim 3 or 4, wherein an index corresponding to said transform kernel in said transform set is signaled in said bitstream.

6. The method of any one of claims 1, 2 and 5, further comprising, or the apparatus of any one of claims 3-5, wherein said one or more processors are further configured to perform:
obtaining a third transform set corresponding to a planar intra prediction mode, wherein said obtaining a transform set is further based on said third transform set, and wherein said transform kernels for said transform set are selected from said first, second and third transform sets.

7. The method of any one of claims 1, 2, 5 and 6, or the apparatus of any one of claims 3-6, wherein a transform kernel is selected from each of said at least a first transform set and a second transform set based on a pre-determined rule to form said transform set.

8. The method of claim 7, or the apparatus of claim 7, wherein transform kernels selected from said at least a first transform set and a second transform set are placed in said transform set based on a pre-determined order.

9. The method of any one of claims 1, 2 and 5-8, or the apparatus of any one of claims 3-8, wherein said first intra prediction mode and second intra prediction mode are angular, planar or DC intra prediction modes, and wherein said block is encoded or decoded in an intra mode other than an angular, planar or DC intra prediction mode or an inter mode.

10. The method of claim 9, or the apparatus of claim 9, wherein said first intra prediction mode and said second intra prediction mode correspond to a largest and a second largest magnitude of values in a histogram of gradients when said block is encoded in a DIMD, MIP, IntraTMP, IBC, or inter mode, and wherein said first and second intra prediction modes are used to determine said first and second transform sets, respectively.

11. The method of claim 9, or the apparatus of claim 9, wherein said first intra prediction mode corresponds to a split direction of partitions of said block and said second prediction intra mode corresponds to an intra mode of a first or second SGPM partition when said block is encoded in SGPM, and wherein said first and second intra prediction modes are used to determine said first and second transform sets, respectively.

12. The method of any one of claims 1, 2 and 5-11, further comprising, or the apparatus of any one of claims 3-11, wherein said one or more processors are further configured to perform:
obtaining a difference between mode indices of said first and second intra prediction modes, wherein only said first transform set is used in forming said transform set responsive to said difference being larger than a value.

13. The method of any one of claims 1, 2 and 5-12, or the apparatus of any one of claims 3-12, wherein said transform kernel is used for secondary transform.

14. The method of any one of claims 1, 2 and 5-12, or the apparatus of any one of claims 3-12, wherein said transform kernel is used for primary transform.

15. A signal comprising video data, formed by performing the method of any one of claims 1 and 5-14.

FIG. 1

EP 4 625 984 A1

FIG. 2

FIG. 3

FIG. 4

FIG. 5

FIG. 6

FIG. 7

LFNST/NSPT LUT

FIG. 8

Final transform set

FIG. 9

Obtain lowFreqTransMatrix — 1010

Obtain LfnstTrSetCand — 1020

Obtain LfnstIndices — 1030

For i < nbTrSetCandidates? — 1040

Set the selected LFNST kernel in the finalLfnstTrSet:
finalLfnstTrSet[i] =
lowFreqTransMatrix[LfnstTrSetCand[i]][LfnstIndices[i]] — 1050

# FIG. 10

Obtain the residual coefficients — 1110

Compute the VIPM1 and VIPM2 — 1120

Build the final NSPT transform set — 1130

Perform RDO to select the best NSPT kernel — 1140

Obtain the transform coefficient using the selected kernel — 1150

Transmit the index to the decoder — 1160

# FIG. 11

Obtain the transformed coefficients — 1210

Decode the transform index — 1220

Obtain VIPM1 and VIPM2 based on the HoG — 1230

Build the final NSPT transform set — 1240

Perform inverse transform using the NSPT kernel in the final transform set corresponding to the transform index — 1250

Obtain the reconstructed residual coefficients — 1260

FIG. 12

FIG. 13

Europäisches
Patentamt

European
Patent Office

Office européen
des brevets

# EUROPEAN SEARCH REPORT

**Application Number**

EP 24 30 5434

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/040120 A1 (EGILMEZ HILMI ENES [US] ET AL) 1 February 2024 (2024-02-01) | 1-5,7,8, 12-15 | INV. H04N19/12 |
| Y | * paragraph [0001] - paragraph [0143] * | 6 | H04N19/159 |
| A | * figures 1-15 * | 9-11 | H04N19/176 |
| | ----- | | H04N19/593 |
| Y | LAUDE THORSTEN ET AL: "A Comprehensive Video Codec Comparison", APSIPA TRANSACTIONS ON SIGNAL AND INFORMATION PROCESSING, [Online] vol. 8, no. 1, 1 January 2019 (2019-01-01) , XP093196484, ISSN: 2048-7703, DOI: 10.1017/ATSIP.2019.23 https://www.repo.uni-hannover.de/bitstream /handle/123456789/11052/A%20Comprehensive% 20Video%20Codec%20Comparison.pdf?sequence= 1&isAllowed=y Retrieved from the Internet: URL:https://www.repo.uni-hannover.de/bitst ream/handle/123456789/11052/A%20Comprehens ive%20Video%20Codec%20Comparison.pdf?seque nce=1&isAllowed=y> [retrieved on 2024-08-19] * page 1 - page 16 * | 6 | |
| | ----- | | TECHNICAL FIELDS SEARCHED (IPC) H04N |

The present search report has been drawn up for all claims

| Place of search | Date of completion of the search | Examiner |
|---|---|---|
| Munich | 20 August 2024 | Ernst, Jens |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 30 5434

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2024

| Patent document cited in search report | Publication date | Patent family member(s) | Publication date |
|---|---|---|---|
| US 2024040120 A1 | 01-02-2024 | NONE | |

For more details about this annex : see Official Journal of the European Patent Office, No. 12/82

EPO FORM P0459